(19) Europäisches Patentamt
European Patent Office
Office européen des brevets

(11) **EP 4 378 893 A1**

(12) **DEMANDE DE BREVET EUROPEEN**

(43) Date de publication:
**05.06.2024 Bulletin 2024/23**

(21) Numéro de dépôt: **23213459.3**

(22) Date de dépôt: **30.11.2023**

(51) Classification Internationale des Brevets (IPC):
***C01F 11/18*** (2006.01)       ***C01C 1/24*** (2006.01)

(52) Classification Coopérative des Brevets (CPC):
(C-Sets disponibles)
**C01F 11/18; C01C 1/24; C04B 14/28; C04B 18/167**

(Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **01.12.2022 FR 2212621**

(71) Demandeur: **Neolithe**
**49290 Chalonnes-sur-Loire (FR)**

(72) Inventeurs:
• **Jardin, Louis**
**49100 Angers (FR)**
• **Pannetier, Benjamin**
**92340 Bourg-la-Reine (FR)**

(74) Mandataire: **Cabinet Chaillot**
**16/20, avenue de l'Agent Sarre**
**B.P. 74**
**92703 Colombes Cedex (FR)**

(54) **PROCÉDÉ DE DÉSULFATATION DE MATÉRIAUX SOLIDES CONTENANT DU GYPSE**

(57) La présente invention porte sur un procédé de désulfatation de matériaux solides contenant du gypse, caractérisé par le fait que l'on traite en milieu aqueux lesdits matériaux par de l'urée et des bactéries uréolytiques ayant une activité enzymatique pour obtenir une solution de sulfate d'ammonium et les matériaux solides désulfatés contenant du carbonate de calcium.

EP 4 378 893 A1

(52) Classification Coopérative des Brevets (CPC):
(Cont.)

C-Sets
**C04B 18/167, C04B 20/023, C04B 20/026**

**Description**

La présente invention porte sur un procédé de désulfatation de matériaux solides contenant du gypse, en particulier de déchets du bâtiment.

La problématique des sulfates dans les matériaux de construction est très importante dans le monde. La Société demanderesse produit des granulats pour construction à partir de déchets du bâtiment. Une des caractéristiques importantes des granulats est une faible teneur en sulfate total. En effet, les sulfates peuvent favoriser l'apparition de gonflement du béton par réaction sulfatique interne, fragilisant les structures en béton utilisant des granulats sulfatés. Le même problème se pose en sous-couche routière, où les granulats utilisés doivent répondre à des teneurs maximales en ions sulfate pour limiter le risque géotechnique.

Or les déchets du bâtiment à partir desquels les granulats sont produits présentent une teneur importante en sulfate de calcium, également appelé gypse, qui provient du plâtre contenu dans les déchets du bâtiment.

Un des moyens de se débarrasser des sulfates et de réaliser un lavage pour dissoudre le gypse. Ce lavage est limité par la faible solubilité du gypse. Il serait donc souhaitable de pouvoir proposer une solution à ce problème afin de pouvoir éliminer les sulfates présents dans les déchets afin de pouvoir proposer un granulat recyclé présentant une teneur en sulfate suffisamment faible pour pouvoir être utilisé comme matière première pour le bâtiment ou les sous-couches routières.

La Société demanderesse a donc mis au point un procédé de désulfatation utilisant des bactéries uréolytiques et de l'urée.

Les bactéries uréolytiques ont été utilisées pour accélérer le lessivage des sulfates en précipitant du carbonate de calcium ($CaCO_3$). Ces bactéries produisent au contact de l'urée des ions carbonate ($CO_3^{2-}$) et ammonium ($NH_4^+$). La calcite $CaCO_3$ précipite lorsque les ions carbonate entrent en contact avec des ions calcium ($Ca^{2+}$). Par la précipitation de la calcite, les ions $Ca^{2+}$ sont consommés et la dissolution du gypse ($CaSO_4$ $2H_2O$) est accélérée, permettant de limiter le volume d'eau nécessaire au lavage. Les ions sulfates sont solubilisés et l'eau riche en sulfate d'ammonium $NH_4SO_4$ peut alors être utilisée à des fins agronomiques, valorisant alors les ions sulfates SO4 des déchets.

A cet effet, la présente invention porte sur un procédé de désulfatation de matériaux solides contenant du gypse, caractérisé par le fait que l'on traite en milieu aqueux lesdits matériaux par de l'urée et des bactéries uréolytiques ayant une activité enzymatique pour obtenir une solution de sulfate d'ammonium et les matériaux solides désulfatés contenant du carbonate de calcium.

Les matériaux solides à traiter contenant du gypse peuvent être choisis parmi :

- les déchets de matériaux de construction de bâtiments ;
- les déchets industriels banaux pollués au gypse ;
- les terres excavées ;
- les granulats naturels ;
- les granulats artificiels ; et
- les granulats recyclés tels que le béton concassé.

Les granulats sont définis d'une manière générale comme des matériaux qui répondent à la norme NF P 18-545.

Selon le procédé de l'invention, on peut conduire les étapes successives suivantes consistant à :

(a) broyer les matériaux solides pour obtenir des matériaux solides broyés ;
(b) imprégner les matériaux solides broyés par une suspension des bactéries uréolytiques ayant une activité enzymatique ;
(c) mettre en contact une solution aqueuse d'urée avec les matériaux solides broyés imprégnés par les bactéries uréolytiques ; et
(d) récupérer une solution de sulfate d'ammonium et les matériaux solides désulfatés contenant du carbonate de calcium.

A l'étape (a), on peut broyer les matériaux à traiter à une grosseur de grains suffisamment faible pour permettre le passage à travers eux de la solution aqueuse d'urée à l'étape (c). En particulier, on peut broyer les matériaux à traiter à une grosseur de grains inférieure ou égale à 2 mm, en particulier de 100 $\mu$m à 1 mm.

A l'étape (b), on peut utiliser une suspension de bactéries uréolytiques choisies parmi les bactéries *Sporosarcina pasteurii*, *Sporosarcina ginsengisoli*, *Proteus vulgaris*, *Bacillus sphaericus*, *Halomonas eurihalina*, *Bacillus fusiformis* et leurs mélanges. En particulier on peut utiliser des bactéries *Sporosarcina Pasteurii* qui sont les bactéries *Sporosarcina Pasteurii* ATCC 11859.

A l'étape (b), on peut utiliser une suspension de bactéries ayant une activité enzymatique totale (AET) supérieure à 400 $\mu$S/cm/min

On peut conduire l'étape (c) en continu en faisant passer la solution aqueuse d'urée à travers les matériaux imprégnés par la suspension bactérienne. En variante, on peut conduire l'étape (c) par lots.

A l'étape (c), on peut utiliser 1 à 10 moles d'urée par mole de gypse. Ceci correspond à un rapport massique urée/gypse de 0,34 à 3,4. En particulier on peut utiliser un rapport massique urée/gypse de 0,45.

La formation de carbonates par l'uréolyse bactérienne de l'urée permet de précipiter du carbonate de calcium en utilisant le calcium d'un substrat gypseux ou de plâtre. La précipitation du calcium entraîne et accélère la dissolution du $CaSO_4\ 2H_2O$, ce qui permet de réduire le volume d'eau nécessaire au lavage. Les ions sulfate restent en solution avec les ions ammonium et le $CaCO_3$ précipite. Les réactions mises en jeu sont indiquées ci-dessous.

$$CaSO_4\ (H_2O)_2 <-> Ca^{2+} + SO_4^{2-} + 2\ H_2O$$

$$CO(NH_2)_2 + H_2O -> CO_3^{2-} + 2\ NH_4^+\ (enzyme)$$

$$Ca^{2+} + CO_3^{2-} -> CaCO_3$$

$$CaSO_4(H_2O)_2 + CO(NH_2)_2 -> CaCO_3 + SO_4^{2-} + 2\ NH_4^+ + H_2O$$

Les exemples ci-dessous illustrent la présente invention sans toutefois en limiter la portée.

Exemples 1 à 3

Mode opératoire général

**Mesure de l'activité enzymatique**

L'activité enzymatique totale (AET) d'un échantillon de suspension bactérienne est mesurée par conductimétrie : on mesure pendant 5 minutes l'augmentation de la conductance (Multimètre Thermofisher Orion Star™A325 pH/Cond), d'une solution de 9 mL à 1,1M d'urée mise en présence de 1 mL de suspension bactérienne. Cette augmentation est due à l'émission de $CO_3^{2-}$ et de $NH_4^+$ par l'hydrolyse de l'urée par la bactérie. Le résultat est donné en $\mu S.cm^{-1}.min^{-1}$. La littérature retient que 1 mS/cm/min correspond à 11 mM d'urée hydrolysée/min.

**Passage de suspension bactérienne à travers une masse de matériaux**

On a préparé des matrices de matériaux à désulfater.

Chaque échantillon de matrice a été disposé dans un tube en PVC de 50mm de diamètre. Un opercule avec un tamis de 300$\mu$m (inox) puis de 15$\mu$m (cellulose) est présent au niveau du culot du tube, afin de laisser percoler le fluide traversant la matrice. 100g d'échantillon ont été disposés au fond de cette installation. Un volume de 250mL de suspension bactérienne cultivée avec une AET de 1180±60 $\mu$S/cm/min est passée à travers chacun des échantillons afin d'imprégner les échantillons avec les bactéries uréolytiques.

L'activité enzymatique dans une matrice de matériaux (AEMD) a été mesurée après la percolation d'un volume de suspension bactérienne dans ladite matrice de matériaux selon l'équation 1 ci-après. En mesurant les volumes initial et final et les activités enzymatiques initiale et finale, on peut, par soustraction, conclure sur la quantité initiale d'enzyme présente au sein de la matrice de matériaux pour l'uréolyse. Cette mesure permet d'ajuster le débit de solution d'urée afin que l'intégralité de l'urée apportée en solution soit hydrolysée.

[Math. 1]

$$AEMD = \frac{AET_{initiale} - AET_{percolée}}{V_{SB\ ini} - V_{SB\ percolée}} \frac{1}{m_{charge}}$$

Dans cette équation :

$AET_{initiale}$ est l'activité enzymatique totale mesurée avant le début du traitement de la masse de déchet $AET_{percolée}$ est l'activité enzymatique totale mesuré sur la suspension

$V_{SB\ ini}$ est le volume initial de la suspension bactérienne

$V_{SB\ percolée}$ est le volume de la suspension bactérienne passée à travers la masse de déchets

$m_{charge}$ est la masse de matériaux dans la colonne.

Puisque les AEMD sont comprises entre 2172 et 2936 μS/cm/min/g, le débit de la solution calcifiant a été basée sur la plus faible activité enzymatique, afin de garantir que toute l'urée utilisée soit consommée dans l'ensemble des échantillons. Cela donne donc un débit 40 mL/h de solution à 1M d'urée.

**Percolation de solution d'urée (exemples de l'invention ci-après) ou d'eau distillée (Exemples comparatifs ci-après)**

On a fait passer 40 mL de solution d'urée chaque heure et on a fait passer 40 mL d'eau distillée pour établir des expériences témoins.

Le nouveau volume de solution d'urée ou d'eau distillée vient chasser par gravité le volume précédent. Le volume récupéré à chaque fraction est noté et la solution percolée est utilisée pour mesurer la concentration en ions sulfate et ammonium. On a également mesuré le pH et la conductivité de la solution récupérée. Régulièrement, la teneur en $CaCO_3$ de l'échantillon dans le tube PVC est mesurée par la ponction d'1g de matière. La teneur en $CaCO_3$ finale est mesurée.

**Mesure de la calcification (teneur en CaCOs)**

La teneur en $CaCO_3$ a été mesurée par un calcimètre de Bernard. Ce montage permet de mesurer le volume de $CO_2$ dégagé par action de l'acide chlorhydrique HCl selon l'équation ci-dessous.

$$CaCO_3 + 2\ HCl \rightarrow CaCl_2 + H_2O + CO_2$$

Après le séchage des échantillons dans une étuve à 50°C pendant 24 h, un échantillon que l'on veut analyser d'environ 1 g a été mis en présence de 25 mL de HCl dans une enceinte confinée. Après agitation de 5 min, on a mesuré le volume de $CO_2$ relargué par l'échantillon.

Le volume de $CO_2$ permet d'accéder à la quantité de $CaCO_3$ dissoute par l'acide. On peut alors exprimer la masse de $CaCO_3$ dans l'échantillon selon l'équation suivante :

[Math. 2]

$$m_{CaCO_3} = \frac{v_{CO_2}}{V_{mCO_2}} M_{CaCO_3}$$

dans laquelle :

$m_{CaCO3}$ est la masse de carbonate de calcium
$V_{CO2}$ est le volume relargué de CO2
$V_{mCO2}$ est le volume molaire du dioxyde de carbone qui est de 24,79L dans les conditions standard de température et de pression (P = $10^5$ Pa, T = 25°C)
$M_{CaCO3}$ est la masse molaire du carbonate de calcium

La méthode est calibrée par une droite d'étalonnage établie avec 10 points dans les gammes de concentration des échantillons de test à l'aide de sable siliceux et par ajout de $CaCO_3$ pur. Le coefficient de la droite d'étalonnage est appliqué pour les mesures expérimentales. La droite d'étalonnage permet de trouver le coefficient qui lie le pourcentage de $CaCO_3$ et le volume de $CO_2$. En mesurant le $CO_2$ dégagé, on obtient alors le $CaCO_3$ des mesures expérimentales.

**Mesure de la teneur en ions sulfate et en ions ammonium**

La mesure de la teneur en ions sulfate et ammonium de la solution de percolation a été effectuée selon la norme NF ISO 15923-1 par spectrophotométrie UV-visible. L'incertitude en LQ est de 20% pour les ions sulfate et 10% pour les ions ammonium. Les échantillons ont été préparés en prenant 30 mL d'eau percolée dilués dans 250mL d'eau distillée.

**Modélisation de la teneur en ions sulfate théorique**

Afin de comparer les ions sulfate relargués aux ions sulfate obtenus théoriquement, on a modélisé le relargage des ions sulfate avec et sans bactéries selon l'équation suivante :

[Math. 3]

$$\% SO_{4\,relargué}(V_{eau\,utilisée}) = \frac{(S_{(CaSO_4\,2H_2O)} \times V_{eau\,utilisée}) + (V_{eau\,utilisée} \times C_{urée} \times M_{SO_4} \times r)}{x_{SO_4}}$$

dans laquelle :

$S_{(CaSO_42H2O)}$ est le taux de dissolution du gypse à 20°C dans l'eau à savoir 2,2 kg/m$^3$
$V_{eau\,utilisée}$ est le volume d'eau de lavage rapporté à la tonne de déchet traitée, exprimé en m$^3$/T
$C_{urée}$ est la concentration molaire en urée de la solution de lavage, exprimée en mole$_{urée}$/m$^3$
$M_{SO4}$ est la masse molaire des ions sulfates à savoir 0,096kg/mol
r (en $n_{SO4}/n_{urée}$) rendement en ions sulfate relargués par quantité d'urée apportée (r est pris égal à 1 car l'urée est introduite moins rapidement que la capacité des enzymes uréolytiques à l'hydrolyser)
$x_{SO4}$ est la proportion d'ions sulfate initialement présentes dans les déchets (en kg$_{SO4}$/T$_{déchets\,traités}$)

Le %SO$_{4relarqué}$ est compris entre 0 et 1.

**Exemples 1 et 2**

On a préparé un milieu simulant la quantité de plâtre dans les déchets avec du sable siliceux de granulométrie moyenne (d90%<315μm) et du CaSO$_4$ 2H$_2$O pur (Sordalab, >99%). On a produit deux matrices simulant les déchets, l'une avec 7% en masse de CaSO$_4$ 2H$_2$O (MS 7%) (Exemple 1) et l'autre avec 30% en masse de CaSO$_4$ 2H$_2$O (MS 30%) (Exemple 2) .

**Exemple 3**

On a utilisé une matrice de déchets complexe (MDC) à l'aide d'une poudre de déchets obtenue par broyage simple. Avant d'être broyés, les déchets contenaient 13% en masse de gypse. La poudre de déchet est tamisée à <600um.
La matrice de déchets broyés MDC permet une rétention des bactéries. Cette rétention permet de réaliser l'action d'uréolyse au sein de la masse de déchets à traiter.

**Résultats**

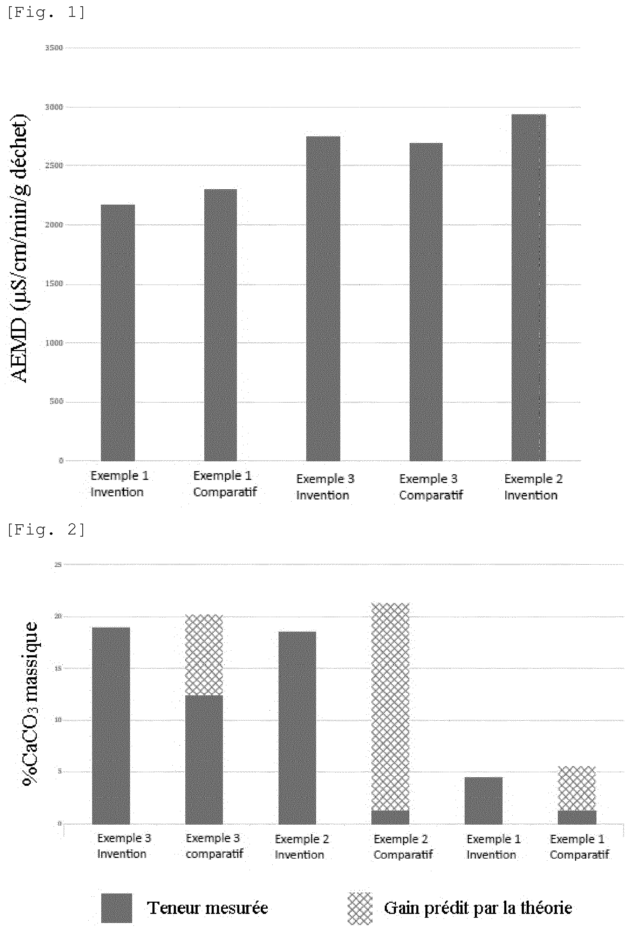

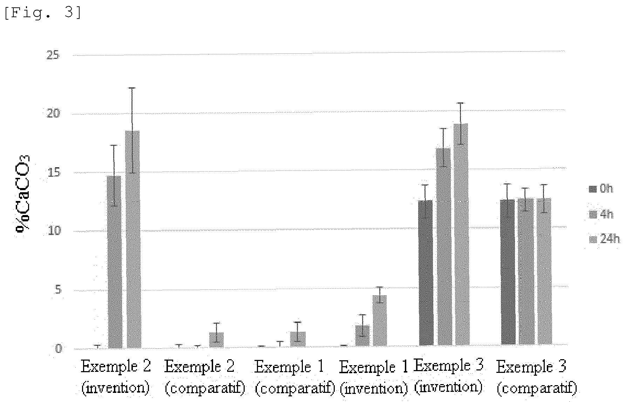

La Figure 1 présente les activités enzymatiques dans les matrices de matériaux des Exemples 1, 2 et 3. On peut observer que la matrice MS 7% de l'Exemple 1 a une moins bonne activité enzymatique en son sein que les matrices MS 30% de l'Exemple 2 et MDC de l'Exemple 3. Cela est dû à une granularité plus importante du sable utilisé pour l'Exemple 1 qui ne permet pas une rétention des bactéries aussi performante que la poudre de déchets utilisée pour préparer la matrice de l'Exemple 3. De plus, la présence de 30% de CaSO$_4$ 2H$_2$O dont la granularité est très fine dans la matrice MS 30% de l'Exemple 2 permet une meilleure rétention que la matrice MS 7% de l'Exemple 1.
La Figure 2 montre la teneur en CaCO$_3$ mesurée dans les échantillons après lavage et la teneur maximale que l'on peut obtenir dans le cas d'une dissolution totale du CaSO$_4$ 2H$_2$O présent dans les échantillons.
En mesurant le taux de CaCO$_3$ à 0h, 4h et 24h on peut observer une augmentation progressive du taux de CaCO$_3$ dans les différents échantillons. Les résultats apparaissent sur la Figure 3.
La teneur initiale en CaCO$_3$ dans la matrice de l'Exemple 3 avoisine 12,4% initialement, probablement dû à une quantité non négligeable de matériaux inertes dans les déchets comme la calcite.
Initialement dans les échantillons MS 7% de l'Exemple 1 et MS 30% de l'Exemple 2, on constate la présence de 1,78% en masse de CaCO$_3$, probablement dû à de légères contaminations du sable utilisé pour préparer les matrices.
Au bout de 24h, on peut constater une augmentation significative de la proportion de CaCO$_3$ au sein des matériaux traités avec de l'urée et des bactéries par rapport aux exemples comparatifs seulement en présence de bactéries. Les taux de de CaCO$_3$ constatés dans les matériaux traités après 24h de traitement atteignent les taux de CaCO$_3$ prédits par la connaissance de la teneur en CaSO$_4$ 2H$_2$O initiale.

Dans les exemples comparatifs, aucune augmentation de la présence de $CaCO_3$ n'est constatée. Cela confirme donc qu'on a bien une réaction de production de $CaCO_3$ grâce à l'apport d'urée en présence des bactéries uréolytiques. Le résultat est particulièrement intéressant, car contrairement à l'ensemble de la littérature traitant de la précipitation de calcite induite par microbiologie, il n'y a pas eu d'apport d'ions $Ca^{2+}$. La production de $CaCO_3$ en 24h suggère donc que des ions $Ca^{2+}$ sont apportés par les matrices.

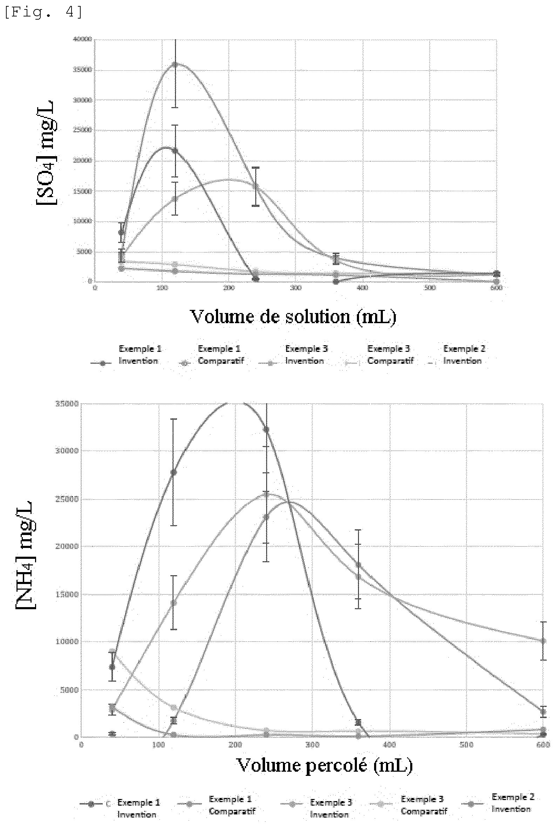

Le relargage du $SO_4$ et du $NH_4$ dans les eaux de lavage permettent de distinguer nettement les échantillons avec et sans urée (Fig. 4).

On peut voir que sans urée, les matrices MS 7% de l'Exemple 1 et MDC de l'Exemple 3 ne relarguent que très peu d'ions sulfate dans l'eau de percolation. Cela permet donc de confirmer que la présence de bactéries uréolytiques et d'urée permet de relarguer massivement dans le milieu aqueux le sulfate du gypse. Si la quantité d'ions sulfate relarguée dans les Exemples comparatifs n'est pas nulle, ceci est dû à la dissolution naturelle du $CaSO_4$ $2H_2O$ dans l'eau, à hauteur de 2,2 g/L.

Concernant le $NH_4$, on observe également une différence notable de comportement entre les Exemples comparatifs et les Exemples de l'invention. Dans les Exemples comparatifs, on observe un maximum dans la première fraction récoltée. Ceci est probablement dû à l'ammonium présent dans le milieu de culture bactérien restant, lavé par l'ajout d'eau distillée.

Les résultats montrent donc un relargage massif d'ions sulfate et ammonium. Ils viennent compléter la constatation faite avec l'analyse des résultats de la teneur en carbonate de calcium : l'hydrolyse de l'urée par les bactéries entraîne bien la précipitation du $CaCO_3$ et la dissolution du $CaSO_4$ $2H_2O$, permettant aux ions sulfate d'être solubilisés et entraînés par la phase aqueuse hors de la matrice de matériaux à traiter. Cela permet de diminuer la teneur en ions sulfate dans une matrice de matériaux à traiter.

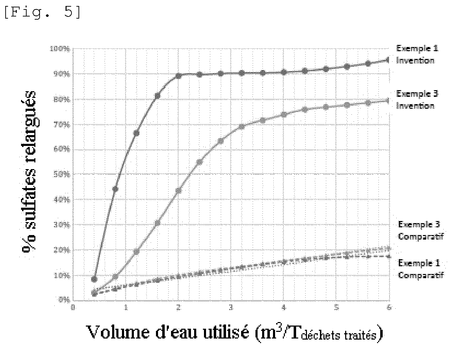

La Figure 5 montre le pourcentage relargué d'ions sulfate en fonction du volume d'eau utilisé.

On voit que l'utilisation d'urée permet de relarguer la quasi-totalité des sulfates à un volume d'eau de 6 m$^3$/tonne de matériaux, alors que ce volume ne permet de relarguer que 20 % des ions sulfates présents dans les Exemples comparatifs.

L'utilisation d'urée permet donc d'économiser environ 17 m$^3$ d'eau / tonne de matériaux pour laver 50 % des ions sulfates et 27 m$^3$ d'eau / tonne de matériaux pour laver 80 % des ions sulfates.

**Revendications**

**1.** - Procédé de désulfatation de matériaux solides contenant du gypse, **caractérisé par le fait que** l'on traite en milieu aqueux lesdits matériaux par de l'urée et des bactéries uréolytiques ayant une activité enzymatique pour obtenir une solution de sulfate d'ammonium et les matériaux solides désulfatés contenant du carbonate de calcium.

**2.** - Procédé selon la revendication 1, **caractérisé par le fait que** les matériaux solides à traiter contenant du gypse sont choisis parmi :

- les déchets de matériaux de construction de bâtiments ;
- les déchets industriels banaux pollués au gypse ;
- les terres excavées ;
- les granulats naturels ;
- les granulats artificiels ; et
- les granulats recyclés tels que le béton concassé.

**3.** - Procédé selon l'une des revendications 1 et 2, **caractérisé par le fait que** l'on conduit les étapes successives suivantes consistant à :

(a) broyer les matériaux solides pour obtenir des matériaux solides broyés ;
(b) imprégner les matériaux solides broyés par une suspension des bactéries uréolytiques ayant une activité enzymatique ;
(c) mettre en contact une solution aqueuse d'urée avec les matériaux solides broyés imprégnés par les bactéries uréolytiques ; et
(d) récupérer une solution de sulfate d'ammonium et les matériaux solides désulfatés contenant du carbonate de calcium.

**4.** - Procédé selon la revendication 3, **caractérisé par le fait qu'**à l'étape (a), on broie les matériaux à traiter à une grosseur de grains suffisamment faible pour permettre le passage à travers eux de la solution aqueuse d'urée à l'étape (c).

5. - Procédé selon la revendication 4, **caractérisé par le fait que** l'on broie les matériaux à traiter à une grosseur de grains inférieure ou égale à 2 mm, en particulier de 100 $\mu$m à 1 mm.

6. - Procédé selon l'une des revendications 3 à 5, **caractérisé par le fait qu'**à l'étape (b), on utilise une suspension de bactéries uréolytiques choisies parmi les bactéries *Sporosarcina pasteurii, Sporosarcina ginsengisoli, Proteus vulgaris, Bacillus sphaericus, Halomonas eurihalina, Bacillus fusiformis* et leurs mélanges.

7. - Procédé selon la revendication 6, **caractérisé par le fait qu'**à l'étape (b), on utilise des bactéries *Sporosarcina Pasteurii* qui sont les bactéries *Sporosarcina Pasteurii* ATCC 11859.

8. - Procédé selon l'une des revendications 3 à 7, **caractérisé par le fait qu'**à l'étape (b), on utilise une suspension de bactéries ayant une activité enzymatique totale (AET) supérieure à 400 $\mu$S/cm/min.

9. - Procédé selon l'une des revendications 3 à 8, **caractérisé par le fait que** l'on conduit l'étape (c) en continu en faisant passer la solution aqueuse d'urée à travers les matériaux imprégnés par la suspension bactérienne.

10. - Procédé selon l'une des revendications 3 à 8, **caractérisé par le fait que** l'on conduit l'étape (c) par lots.

11. - Procédé selon l'une des revendications 3 à 10, **caractérisé par le fait qu'**à l'étape (c), on utilise 1 à 10 moles d'urée par mole de gypse.

[Fig. 3]

[Fig. 4]

Volume de solution (mL)

Exemple 1 Invention  Exemple 1 Comparatif  Exemple 3 Invention  Exemple 3 Comparatif  Exemple 2 Invention

Volume percolé (mL)

C Exemple 1 Invention  Exemple 1 Comparatif  Exemple 3 Invention  Exemple 3 Comparatif  Exemple 2 Invention

[Fig. 5]

EP 4 378 893 A1

Europäisches
Patentamt
European
Patent Office
Office européen
des brevets

# RAPPORT DE RECHERCHE EUROPEENNE

Numéro de la demande

EP 23 21 3459

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 535 883 A1 (AVECOM N V [BE]) 1 juin 2005 (2005-06-01) * alinéas [0030], [0034], [0042], [0060] * | 1-11 | INV. C01F11/18 C01C1/24 |
| A | OKWADHA G D O ET AL: "Optimum conditions for microbial carbonate precipitation", CHEMOSPHERE, PERGAMON PRESS, OXFORD, GB, vol. 81, no. 9, 1 novembre 2010 (2010-11-01), pages 1143-1148, XP027449865, ISSN: 0045-6535, DOI: 10.1016/J.CHEMOSPHERE.2010.09.066 [extrait le 2010-10-13] * le document en entier * | 1-11 | |
| A | MONDAL SANDIP ET AL: "Review on microbial induced calcite precipitation mechanisms leading to bacterial selection for microbial concrete", CONSTRUCTION AND BUILDING MATERIALS, ELSEVIER, NETHERLANDS, vol. 225, 23 juillet 2019 (2019-07-23), pages 67-75, XP085805979, ISSN: 0950-0618, DOI: 10.1016/J.CONBUILDMAT.2019.07.122 [extrait le 2019-07-23] * section 1, 2.4, 5 * | 1-11 | DOMAINES TECHNIQUES RECHERCHES (IPC) C01F C01C |

Le présent rapport a été établi pour toutes les revendications

| Lieu de la recherche | Date d'achèvement de la recherche | Examinateur |
|---|---|---|
| Munich | 9 avril 2024 | Nobis, Barbara |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 4 378 893 A1

## ANNEXE AU RAPPORT DE RECHERCHE EUROPEENNE
## RELATIF A LA DEMANDE DE BREVET EUROPEEN NO.

EP 23 21 3459

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09−04−2024

| Document brevet cité au rapport de recherche | Date de publication | Membre(s) de la famille de brevet(s) | Date de publication |
|---|---|---|---|
| EP 1535883 A1 | 01−06−2005 | BE 1015801 A6 | 06−09−2005 |
| | | EP 1535883 A1 | 01−06−2005 |

Pour tout renseignement concernant cette annexe : voir Journal Officiel de l'Office européen des brevets, No.12/82

EPO FORM P0460

14